# EUROPEAN PATENT SPECIFICATION

(11) **EP 4 119 809 B1**
(45) Date of publication and mention of the grant of the patent: **05.03.2025**
(21) Application number: 21185502.8
(22) Date of filing: 14.07.2021
(51) Int. Cl.: F16D 1/08, F16D 7/02

(54) **TORQUE LIMITING COUPLING**
DREHMOMENTBEGRENZUNGSKUPPLUNG
ACCOUPLEMENT LIMITEUR DE COUPLE

(43) Date of publication of application: 18.01.2023
(73) Proprietor: Voith Patent GmbH, 89522 Heidenheim (DE)
(72) Inventor: Bergström, David, 82494 Hudiksvall (SE); Albinsson, Andreas, 82470 Delsbo (SE)
(74) Representative: Voith Patent GmbH - Patentabteilung

(56) References cited:
- CN-A- 102 996 658
- DE-A1- 4 112 484
- DE-U1- 9 208 196
- JP-U- H0 538 426

## Description

The present invention relates to a torque limiting coupling comprising a first shaft, a second shaft, which is designed as a hollow shaft, and a coupling ring. The coupling ring comprises a coupling sleeve with an inner surface and an outer surface, where the coupling sleeve is arranged in radial direction between the first shaft and the second shaft, such that the inner surface is in frictional contact with the first shaft and the outer surface is in frictional contact with the second shaft. And the coupling sleeve is double-walled with an internal annular pressure oil chamber, designed in such a way, that the coupling sleeve increases its radial thickness when the oil chamber is filled with pressurized oil and thereby increases the pressure forces between the surfaces and the shafts in order to allow torque transfer between the two shafts. When the oil chamber is not filled with pressurized oil, the coupling sleeve transfers no torque, because at least one of the contact surfaces the inner surface or the outer surface slips relatively to the corresponding shaft.

Such torque limiting couplings are known in prior art for example disclosed in US 4,264,229 as shown in the embodiment according to figure 5, or in DE 41 12 484A1, JP H05 38426 U, DE 92 08 196 U1 and CN 102 996 658 A. These couplings are often used as safety couplings to protect a drive train from overload. That is especially important for drive trains where a blockage could occur at the load side. These couplings comprises two cylindrical contact surfaces, an inner cylindrical surface and an outer cylindrical surface. The thickness of the coupling can be increased by a pressurized oil chamber between the two surfaces. This sufficient contact pressure is created for transferring torque. Once the oil pressure is relieved, torque transfer is no longer possible.

To reach a high reliability of the coupling the shafts need to fulfill high requirements in accuracy of the contact surfaces and diameters. Resulting in high design requirements and to high machining costs. Furthermore if these requirements are not met the result is reduced lifetime or reduced reliability. Additionally the correct assembly is very difficult and critical regarding functionality.

The tasks of the invention are an improvement of the torque limiting coupling, an easier assembly and a reduction of costs for these applications in order to overcome the above mentioned problems.

The inventive solution for this task is given by a torque limiting coupling according to claim 1. Further advantageous features for embodiments according to the invention are found in the dependent claims.

The inventive torque limiting coupling is characterized in that the outer surface of the coupling sleeve which is in contact with the second shaft is of conical shape. Essential for this solution is that the torque transmission takes place over the conical outer surface. Otherwise, it is not possible to save construction space for the coupling. The conical shape of the outer surface of the coupling sleeve allows more flexibility for assembly of the second shaft which has a corresponding conical inner surface. So some inaccuracy from manufacturing can be compensated by adjusting the position of the second shaft in longitudinal direction during assembly in order to reach the necessary accuracy of the contact pressure between these two parts. It is a tremendous advantage for manufacturing and assembly of the second shaft.

Also for disassembly the torque limiting coupling is advantageous in contrast to the known design with cylindrical surfaces, where the second shaft always needs to be heated up for assembly or disassembly. The second shaft, designed as a hollow shaft, could also be a kind of hub.

A further advantage of this adjustable contact pressure between outer surface of the coupling sleeve and the second shaft is that you can create a well-defined situation for slippage in case of overload. By adjusting a slightly higher contact pressure on the outer surface compared to the inner surface the slippage will always occur first on the inner surface. That reduces uncontrolled wear of the outer surface as it is unavoidable with the couplings in prior art.

In a preferred embodiment the taper ratio K for the conical shape of the outer surface is between minimum 1:200 and maximum 1:20, especially preferred between 1:100 and 1:30, where the taper ratio is defined as change of the diameter D of the outer surface over the length of the conus. A taper ratio K= 1:100 for example means that the diameter D changes by 1 mm over 100 mm length of the conus.

Within that given range the advantages can be achieved best. If the taper ratio K is too small the conus is so flat that no sufficient difference can be reached in surface pressure by variation of the position of the second shaft. And if the taper ratio K is too high there is not enough possibility for adjusting the relative position in longitudinal direction in order to compensate for inaccuracies of manufacturing.

In a further preferred embodiment for the coupling the length L of the outer surface of the coupling sleeve is between 50 mm and 250 mm, preferred between 80 mm and 180 mm. With that length there is on the one hand enough contact area for the torque transfer and on the other hand enough length for adjustment of the position of the second shaft. As the length L is considered the length of the outer surface in longitudinal direction where the coupling sleeve is in contact with the second shaft.

In order to create enough contact pressure by changing the thickness of the coupling sleeve it is advantageous that the thickness t of the coupling sleeve is between 10 mm and 30 mm. Thus results in enough stability and enough flexibility of the sleeve to create the necessary surface pressure. Decisive for the transferrable torque are the mechanical properties, such as diameter, length and thickness of the coupling sleeve as well as the oil pressure.

A preferred embodiment of the coupling include a coupling ring that comprises a shear tube closing the pressure oil chamber when filled with pressurized oil. Additionally, there is a shear ring connected to the first shaft, and comprising a shear edge designed to cut off a tip of the shear tube, if the first shaft is slipping relatively to the second shaft. That slipping occurs, when the torque is higher than a predefined maximum transferable torque given by the oil pressure and the design of the coupling. By cutting of the tip of the shear tube the pressure oil chamber is opened and the oil pressure is relieved. Thereby the surface pressure at the coupling sleeve is reduced and no torque is transferred between first and second shaft. With this configuration the drive train is protected against overload for example in case of blocking on the load side of the drive train.

After refilling the pressure oil chamber with pressurized oil and closing the opening, for example with a new shear tube, the coupling is reset and again transfers torque between first and second shaft.

Further, it is advantageous that the coupling comprises a first roller bearing between the first shaft and the second shaft or between the first shaft and the coupling ring, and that it comprises a second roller bearing between the first shaft and the coupling ring. With these roller bearings the second shaft can rotate around the first shaft with reduced friction, when the pressure oil chamber is not filled with pressurized oil. That reduces the risk of damages for the contact surfaces.

In another preferred embodiment there is a set of fastening screws to connect the coupling ring to the second shaft, especially preferred a set of four screws, designed in such a way that with the fastening screws the position of the second shaft on the conical coupling sleeve can be adjusted. The adjustment essentially takes place in longitudinal direction to adapt to any manufacturing or assembly tolerances. By tightening these screws the second shaft is moved over the conus of the coupling ring and the contact pressure is increased. Also the contact pressure between second shaft and coupling sleeve can be adjusted by these screws.

An further advantage is given if the coupling comprises a set of distance screws screwed in a thread of the coupling ring to define a distance between a connection flange of the coupling ring and the second shaft, preferred a set of four screws. With these distance screws a stop position for the movement of the second shaft over the conus can be defined. That improves the possibilities for alignment during assembly.

In an especially preferred embodiment the second shaft is a hollow shaft of a rotor of an electric motor. Due to the improved possibilities for adjustment of the second shaft it is possible to directly include the hollow shaft of a rotor in the torque limiting coupling.

Furthermore, it is possible that the first shaft is formed by the driven shaft of an electric motor to be connected to a load or a gear.

That feature allows an integration of the torque limiting coupling in an electric motor and saves installation space in applications.

In a preferred application, the torque limiting coupling is designed to be used in the main drive train of a tunnel boring machine, especially in an electric motor of the main drive. Particularly in tunnel boring machines it is important to protect the drive train reliably against overload. But it is also necessary to save space for installation and simplify the assembly.

The following figures show preferred embodiments according to the invention. The mentioned features also can be combined in different ways and are not meant to be limited to the concretely shown combinations.

The figures show:
- **Fig.1**: Sectional view of an embodiment according to the invention
- **Fig.2a,b**: Front view with and without shear ring
- **Fig.3a,b**: Details in sectional view
- **Fig.4**: Sectional view of an further preferred embodiment

Following, the figures are described in detail. Same reference numbers mean same or similar parts or components.

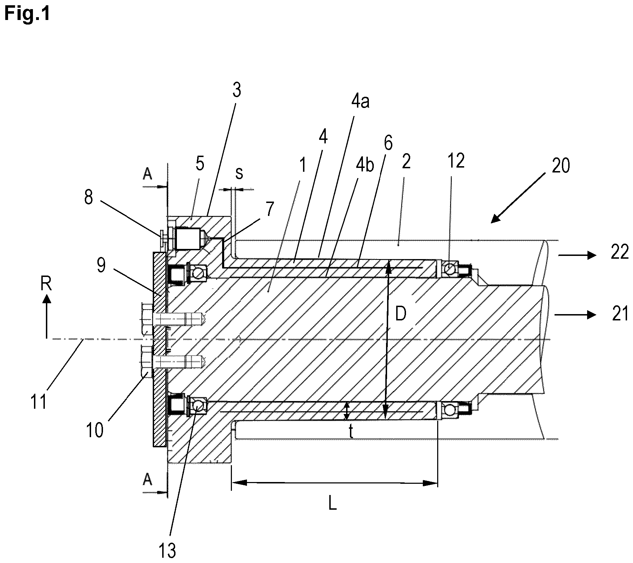

**Fig.1** shows a preferred embodiment for the torque limiting coupling 20 according to the invention. The first shaft 1 is connected or is designed to be connected to a load 21. The coupling ring 3 is mounted on the cylindrical surface of the first shaft.

The coupling ring 3 comprises the connection flange 5 and the coupling sleeve 4. The coupling sleeve 4 is positioned in radial direction R between the first shaft 1 and the second shaft 2. The second shaft 2 is designed as hollow shaft or as hub. It is connected or is designed to be connected to a drive, for example to the rotor 22 of an electric motor.

The coupling sleeve 4 has an inner surface 4b, which is in contact with the cylindrical surface of the first shaft 1, and an outer surface 4a, which is in areal contact with the second shaft 2. The outer surface 4a is of conical shape as well as the corresponding inner surface of the hollow shaft or hub 2. The coupling sleeve 4 includes the pressure oil chamber 6, which is designed as a narrow annular gap. If this pressure oil chamber 6 is filled with pressurized oil the thickness t of the sleeve 4 increases and creates the desired contact pressure for the torque transmission between the first shaft 1, the coupling ring 3 and the second shaft 2. If the oil pressure is relieved there is no torque transmission and the coupling ring 3 slips at the inner surface 4b relatively to the first shaft 1. The torque limiting coupling is released by relieving the oil pressure.

Variation of the gap s is allowed for adjusting the second shaft 2 on the conical coupling sleeve 4 in longitudinal direction. Due to the conical outer surface 4b the contact pressure between the second shaft 2 and the coupling sleeve 4 can be adjusted over its position. The further the second shaft 2 is moved over the coupling sleeve 4 the higher is the contact pressure. Preferable it is adjusted in such a way that its contact pressure is slightly higher than the contact pressure between coupling sleeve 4 and first shaft 1. That means in case of slippage it will always slip first on the inner surface 4b. On the other hand, the position adjustment can compensate for some tolerances in manufacturing or assembly of the second shaft 2. That allows more flexibility for the connection to the motor 22. This way of assembly is much better than with the known cylindrical surfaces where the second shaft 2 needs to be heated up for assembly or disassembly.

The taper ratio K influences how the contact pressure depends on the position of the second shaft 2. The smaller the taper ration K the more variation of the position in longitudinal direction is necessary or respectively allowed to create a certain pressure increase. The preferred range for the taper ratio K is between 1:200 and 1:20, especially preferred between 1:100 and 1:30. The taper ratio K is defined as change of the diameter D over the length of the conus. That means a taper ratio K= 1:100 would mean that the diameter D increases by 1 mm for each 100 mm of length of the conus.

In one example the diameter D of the outer surface 4a is around 100 mm and the length of the conus is around 120 mm. That gives with a taper ratio of K=1:100 a diameter difference ΔD of 1.2 mm over the full conus length.

The shear tube 8 closes the pressure oil channel 7 and the pressure oil chamber 6 to maintain the oil pressure and with it the contact pressure and the ability to transfer torque. The shear tube has a dedicated tip with a breaking point. If the tip is cut off, the pressure oil channel 7 is open to the ambient, the oil pressure is relieved and no torque will be transferred over the coupling ring 3.

Furthermore it is shown, that the shear ring 9 which is connected to the first shaft 1 by some screws 10. The shear ring 9 is dedicated to release the coupling in case of too high torque. If the torque is higher than the maximum transferable torque of the coupling ring 3, the second shaft 2 and the coupling ring 3 slips at the inner surface 4b relatively to the first shaft 1 and the connected shear ring 9. This leads to that the shear edge of the shear ring 9 cuts off the tip of the shear tube 8 and the oil pressure will be relieved.

For a reliable rotation in case of release of the coupling there are two roller bearings 12,13 to stabilize it. The first roller bearing 12 between the first shaft 1 and the second shaft 2, and the second roller bearing 13 between the first shaft 1 and the coupling ring 3. Alternatively, the first roller bearing 12 could be also be positioned between the first shaft 1 and the coupling ring 3. Preferred one or both roller bearings 12,13 are designed as ball bearings. Alternatively the roller bearings can be design for example as needle bearings or conical roller bearings or as any other type of roller bearings.

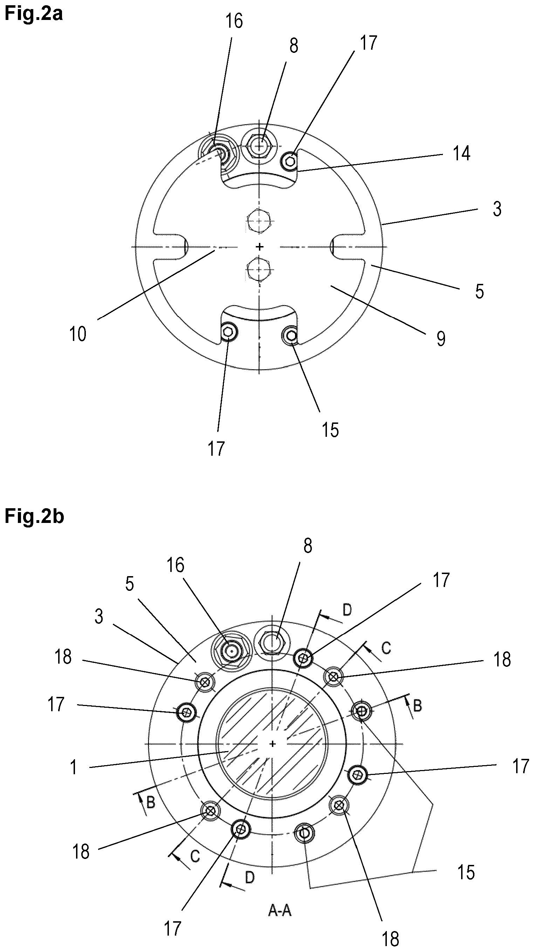

The **Fig. 2a** and **2b** show the front view along the line A-A of figure 1.

In Fig.2a it is shown that the mounted shear ring 9 is connected to the first shaft by two screws 10. The recess with the shear edges 14 is visible. If the torque is over the limit, the first shaft slips relatively to the coupling ring 3 connected with the second shaft. The shear ring 9 rotates relatively to the coupling ring 3 and cuts off the tip of the shear tube 8 and with it releases the coupling. A replacement of the shear tube 8 and a refill of the pressure oil chamber with pressurized oil via the pressure oil port 16 is required after the realease.

Fig.2b shows the front view with removed shear ring. The face of the first shaft 1 and the face of the coupling ring 3 with its connection flange 5 can be seen. There are some lubrication oil ports 15 for supply of the roller bearings. And a set of four fastening screws 17 and a set of four distance screws 18 is visible. Alternatively, it is also possible to use a set of two or three screws or more than four screws.

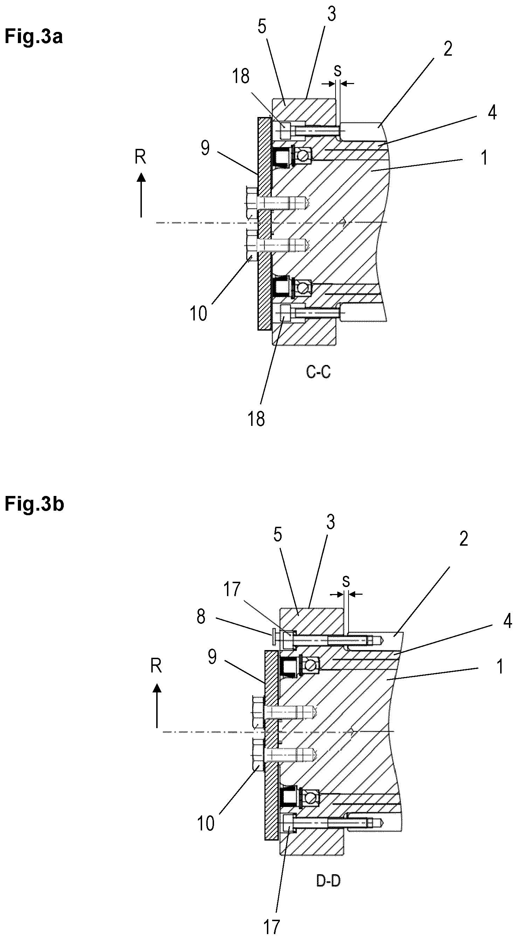

The views in **Fig.3a** and **3b** are sectional views along the line C-C respectively D-D.

Fig.3a shows the situation for the distance screws 18. They are screwed in a thread in the connection flange 5. They provide a stop for the movement of the second shaft 2 over the coupling sleeve 4 during assembly and with it they can define the gap s.

The situation for the fastening screws 17 is given in Fig.3b. With the fastening screws 18 the second shaft 2 can be pulled towards the connection flange 5 until the distance screws stops this movement. By adjusting the distance screws 18 and the fastening screws 17 a reliable and easy assembly is achieved even in case of some manufacturing or assembly tolerances at the shafts. Beside the possibility to adapt the exact position of the second shaft 2 on the coupling sleeve 4 there is the option to adjust the contact pressure at the outer surface of the coupling sleeve 4 over the conus.

In total, the developed solution for the torque limiting coupling provides many advantages over the known prior art. It provides improved controllability of the torque transfer at the outer surface because of the conus shape. Furthermore better mountability and more reliable and easier assembly is achieved. Adjustability is improved for the position of the second shaft relatively to the coupling ring. This way it is possible to compensate manufacturing or assembly tolerances. Reliable and controlled release of the coupling is achieved in that the slipping always occurs at the inner surface of the coupling sleeve. Less construction space is required for the coupling and therefore easier implementation of the coupling in a drive train application.

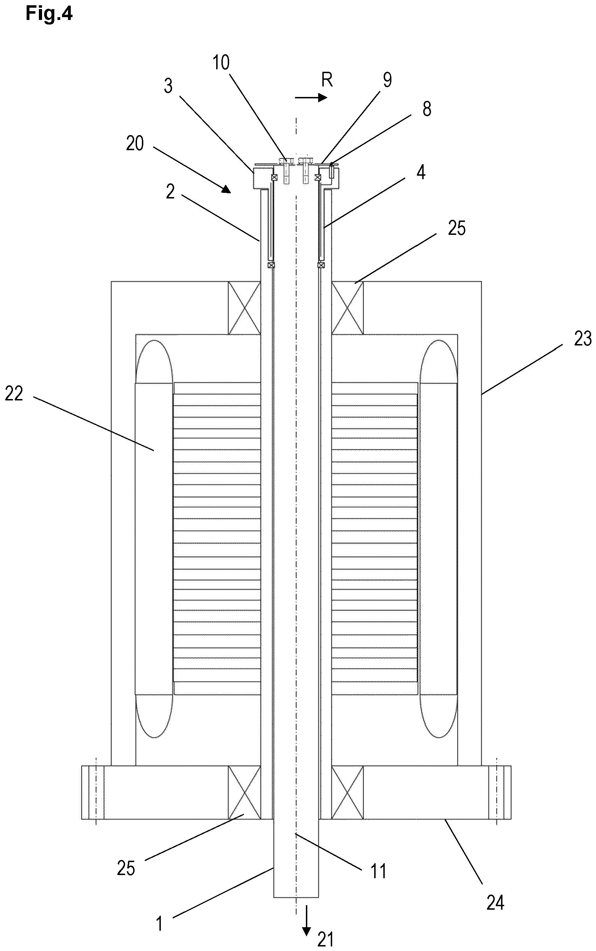

In **Fig.4** a schematic demonstration is given for a preferred implementation of the torque limiting coupling 20 in an electric motor, especially in an electric motor for the drive train of a tunnel boring machine.

In this embodiment the first shaft 1 is identical with the motor shaft and can be connected to load 21. The second shaft 2 is designed as a hollow shaft and is directly combined with the rotor 22 of the electric motor. This is only possible because of the improved ability for compensation of any tolerances in this solution.

The second shaft 2 is supported in the housing 23 of the motor via the motor bearings 25. With the motor flange 24 it could be connected to a gear box.

The coupling 20 comprises the coupling ring 3 with its coupling sleeve 4, as describe previously. The shear ring 9 connected to the first shaft 1 by the screws 10 is dedicated to release the coupling by cutting of the tip of the shear tube 8, if the torque exceeds the set limit and the second shaft 2 rotates relatively to the first shaft 1.

This coupling according to the invention saves construction space and is easy accessible for refilling or maintenance because of its position at the non-driven end of the electric motor.

### List of references

- 1: first shaft
- 2: second shaft
- 3: coupling ring
- 4: coupling sleeve
- 4a: outer surface
- 4b: inner surface
- 5: connection flange
- 6: pressure oil chamber
- 7: pressure oil channel
- 8: shear tube
- 9: shear ring
- 10: screws
- 11: rotational axis
- 12: first rolling bearing
- 13: second rolling bearing
- 14: shear edge
- 15: lubrication oil port
- 16: pressure oil port
- 17: fastening screws
- 18: distance screws
- 20: torque limiting coupling
- 21: to load
- 22: rotor of electric motor
- 23: stator and housing of electric motor
- 24: flange of electric motor
- 25: bearings of electric motor
- D: diameter of the outer surface
- K: taper ratio
- t: thickness
- L: length of the outer surface
- R: radial direction
- s: gap

## Claims

1. Torque limiting coupling (20) comprising a first shaft (1), a second shaft (2), which is designed as a hollow shaft, and a coupling ring (3), where the coupling ring (3) comprises a coupling sleeve (4) with an inner surface (4b) and an outer surface (4a), where the coupling sleeve (4) is arranged in radial direction (R) between the first shaft (1) and the second shaft (2), such that the inner surface (4b) is in frictional contact with the first shaft (1) and the outer surface (4a) is in frictional contact with the second shaft (2), and where the coupling sleeve (4) is double-walled with an internal annular pressure oil chamber (6), designed in such a way, that the coupling sleeve increases its radial thickness (t) when the oil chamber (6) is filled with pressurized oil and thereby increases the pressure forces and thereby the friction between the surfaces (4a, 4b) and the shafts (1,2) in order to allow torque transfer between the two shafts (1,2), and that the coupling sleeve transfers no torque, when the oil chamber is not filled with pressurized oil,
**characterized in**
**that** the outer surface (4a) of the coupling sleeve which is in contact with the second shaft (2) is of conical shape and that the second shaft (2) has a corresponding conical surface.

2. Torque limiting coupling (20) according to claim 1
**characterized in**
**that** the taper ratio K for the conical shape of the outer surface (4a) is between 1:200 and 1:20, preferred between 1:100 and 1:30, where the taper ratio is defined as change of the diameter D of the outer surface (4a) over the length of the conus.

3. Torque limiting coupling (20) according to claim 1 or 2
**characterized in**
**that** the length L of the outer surface (4a) of the coupling sleeve (4) is between 50 mm and 250 mm, preferred between 80 mm and 180 mm.

4. Torque limiting coupling (20) according to one of the previous claims **characterized in**
**that** the thickness t of the coupling sleeve (4) is between 10 mm and 30 mm.

5. Torque limiting coupling (20) according to one of the previous claims **characterized in**
**that** the coupling ring (3) comprises a shear tube (8) closing the pressure oil chamber (6) when filled with pressurized oil, and that there is a shear ring (9) connected to the first shaft (1) and comprising a shear edge (14) designed to cut off a tip of the shear tube (8) in order to open the pressure oil chamber if the first shaft (1) is slipping relatively to the second shaft (2) which is the case, when the torque is higher than a predefined maximum transferable torque given by the oil pressure and the design of the coupling.

6. Torque limiting coupling (20) according to one of the previous claims **characterized in**
**that** it comprises a first roller bearing (12) between the first shaft (1) and the second shaft (2) or between the first shaft (1) and the coupling ring (3), and that it comprises a second roller bearing (13) between the first shaft (1) and the coupling ring (3).

7. Torque limiting coupling (20) according to one of the previous claims **characterized in**
**that** it comprises a set of fastening screws (17) to connect the coupling ring (3) to the second shaft (2), preferred a set of four screws (17), designed in such a way that with the fastening screws (17) the position of the second shaft (2) on the conical coupling sleeve (4) can be adjusted.

8. Torque limiting coupling (20) according to one of the previous claims **characterized in**
**that** it comprises a set of distance screws (18) screwed in a thread of the coupling ring (3) to define a distance between a connection flange (5) of the coupling ring (3) and the second shaft (2), preferred a set of four screws (18).

9. Torque limiting coupling (20) according to one of the previous claims **characterized in**
**that** the second shaft (2) is a hollow shaft of a rotor (21) of an electric motor.

10. Torque limiting coupling (20) according to one of the previous claims **characterized in**
**that** the first shaft (1) is a driven shaft of an electric motor to be connected to a load or a gear.

11. Torque limiting coupling (20) according to one of the previous claims **characterized in**
**that** it is designed to be used in the main drive train of a tunnel boring machine.

## Patentansprüche

1. Drehmomentbegrenzungskupplung (20), umfassend eine erste Welle (1), eine zweite Welle (2), die als Hohlwelle ausgebildet ist, und einen Kupplungsring (3), wobei der Kupplungsring (3) eine Kupplungshülse (4) mit einer Innenfläche (4b) und einer Außenfläche (4a) umfasst, wobei die Kupplungshülse (4) in radialer Richtung (R) zwischen der ersten Welle (1) und der zweiten Welle (2) so angeordnet ist, dass die Innenfläche (4b) in Reibkontakt mit der ersten Welle (1) ist und die Außenfläche (4a) in Reibkontakt mit der zweiten Welle (2) ist, und wobei die Kupplungshülse (4) doppelwandig mit einer inneren ringförmigen Druckölkammer (6) ausgebildet ist, die so ausgebildet ist, dass die Kupplungshülse ihre radiale Dicke (t) vergrößert, wenn die Ölkammer (6) mit Drucköl gefüllt ist und dadurch die Druckkräfte und damit die Reibung zwischen den Flächen (4a, 4b) und den Wellen (1, 2) erhöht, um eine Drehmomentübertragung zwischen den zwei Wellen (1, 2) zu ermöglichen, und dass die Kupplungshülse kein Drehmoment überträgt, wenn die Ölkammer nicht mit Drucköl gefüllt ist,
**dadurch gekennzeichnet,**
**dass** die Außenfläche (4a) der Kupplungshülse, die in Kontakte mit der zweiten Welle (2) ist, konusförmig ist und dass die zweite Welle (2) eine entsprechende konische Fläche aufweist.

2. Drehmomentbegrenzungskupplung (20) nach Anspruch 1, **dadurch gekennzeichnet,**
**dass** das Kegelverhältnis K für die konische Form der Außenfläche (4a) zwischen 1:200 und 1:20, vorzugsweise zwischen 1:100 und 1:30, beträgt, wobei das Kegelverhältnis als Änderung des Durchmessers D der Außenfläche (4a) über die Länge des Konus definiert ist.

3. Drehmomentbegrenzungskupplung (20) nach Anspruch 1 oder 2,
**dadurch gekennzeichnet,**
**dass** die Länge L der Außenfläche (4a) der Kupplungshülse (4) zwischen 50 mm und 250 mm, vorzugsweise zwischen 80 mm und 180 mm, beträgt.

4. Drehmomentbegrenzungskupplung (20) nach einem der vorhergehenden Ansprüche,
**dadurch gekennzeichnet,**
**dass** die Dicke t der Kupplungshülse (4) zwischen 10 mm und 30 mm beträgt.

5. Drehmomentbegrenzungskupplung (20) nach einem der vorhergehenden Ansprüche,
**dadurch gekennzeichnet,**
**dass** der Kupplungsring (3) ein Scherrohr (8) umfasst, das die Druckölkammer (6) verschließt, wenn diese mit Drucköl gefüllt ist, und dass ein mit der ersten Welle (1) verbundener Scherring (9) mit einer Scherkante (14) vorgesehen ist, die dazu ausgebildet ist, eine Spitze des Scherrohres (8) abzuschneiden, um die Druckölkammer zu öffnen, wenn die erste Welle (1) relativ zur zweiten Welle (2) rutscht, was dann der Fall ist, wenn das Drehmoment größer als ein vordefiniertes maximal übertragbares Drehmoment ist, das durch den Öldruck und die Ausbildung der Kupplung gegeben ist.

6. Drehmomentbegrenzungskupplung (20) nach einem der vorhergehenden Ansprüche,
**dadurch gekennzeichnet,**
**dass** diese ein erstes Wälzlager (12) zwischen der ersten Welle (1) und der zweiten Welle (2) oder zwischen der ersten Welle (1) und dem Kupplungsring (3) umfasst und dass diese ein zweites Wälzlager (13) zwischen der ersten Welle (1) und dem Kupplungsring (3) umfasst.

7. Drehmomentbegrenzungskupplung (20) nach einem der vorhergehenden Ansprüche,
**dadurch gekennzeichnet,**
**dass** diese einen Satz Befestigungsschrauben (17) zur Verbindung des Kupplungsrings (3) mit der zweiten Welle (2), vorzugsweise einen Satz von vier Schrauben (17), umfasst, die so ausgebildet sind, dass mit den Befestigungsschrauben (17) die Lage der zweiten Welle (2) auf der konischen Kupplungshülse (4) einstellbar ist.

8. Drehmomentbegrenzungskupplung (20) nach einem der vorhergehenden Ansprüche,
**dadurch gekennzeichnet,**
**dass** diese einen Satz Distanzschrauben (18) umfasst, die in ein Gewinde des Kupplungsrings (3) eingeschraubt sind, um einen Abstand zwischen einem Verbindungsflansch (5) des Kupplungsrings (3) und der zweiten Welle (2) zu definieren, vorzugsweise einen Satz von vier Schrauben (18).

9. Drehmomentbegrenzungskupplung (20) nach einem der vorhergehenden Ansprüche,
**dadurch gekennzeichnet**,
das die zweite Welle (2) eine Hohlwelle eines Rotors (21) eines Elektromotors ist.

10. Drehmomentbegrenzungskupplung (20) nach einem der vorhergehenden Ansprüche,
**dadurch gekennzeichnet,**
**dass** die erste Welle (1) eine Abtriebswelle eines Elektromotors ist, die mit einer Last oder einem Getriebe verbunden werden soll.

11. Drehmomentbegrenzungskupplung (20) nach einem der vorhergehenden Ansprüche,
**dadurch gekennzeichnet,**
**dass** diese für den Einsatz im Hauptantriebsstrang einer Tunnelbohrmaschine ausgebildet ist.

## Revendications

1. Accouplement limiteur de couple (20) comprenant un premier arbre (1), un second arbre (2), qui est conçu comme un arbre creux, et une bague d'accouplement (3), la bague d'accouplement (3) comprenant un manchon d'accouplement (4) avec une surface intérieure (4b) et une surface extérieure (4a), le manchon d'accouplement (4) étant disposé dans la direction radiale (R) entre le premier arbre (1) et le second arbre (2), de sorte que la surface intérieure (4b) soit en contact par friction avec le premier arbre (1) et la surface extérieure (4a) soit en contact par friction avec le second arbre (2), et le manchon d'accouplement (4) étant à double paroi avec une chambre à huile sous pression interne annulaire (6), conçu de sorte que le manchon d'accouplement augmente son épaisseur radiale (t) lorsque la chambre à huile (6) est remplie d'huile sous pression et augmente ainsi les forces de pression et donc la friction entre les surfaces (4a, 4b) et les arbres (1, 2) afin de permettre le transfert de couple entre les deux arbres (1, 2), et que le manchon d'accouplement ne transfère aucun couple lorsque la chambre à huile n'est pas remplie d'huile sous pression,
**caractérisé en ce**
**que** la surface extérieure (4a) du manchon d'accouplement qui est en contact avec le second arbre (2) est de forme conique et que le second arbre (2) présente une surface conique correspondante.

2. Accouplement limiteur de couple (20) selon la revendication 1
**caractérisé en ce**
**que** le rapport de conicité K pour la forme conique de la surface extérieure (4a) est compris entre 1 : 200 et 1 : 20, de préférence entre 1 : 100 et 1 : 30, le rapport de conicité étant défini comme la variation du diamètre D de la surface extérieure (4a) sur la longueur du cône.

3. Accouplement limiteur de couple (20) selon la revendication 1 ou 2
**caractérisé en ce**
**que** la longueur L de la surface extérieure (4a) du manchon d'accouplement (4) est comprise entre 50 mm et 250 mm, de préférence entre 80 mm et 180 mm.

4. Accouplement limiteur de couple (20) selon l'une des revendications précédentes
**caractérisé en ce**
**que** l'épaisseur t du manchon d'accouplement (4) est comprise entre 10 mm et 30 mm.

5. Accouplement limiteur de couple (20) selon l'une des revendications précédentes
**caractérisé en ce**
**que** la bague d'accouplement (3) comprend un tube de cisaillement (8) fermant la chambre à huile sous pression (6) lorsqu'elle est remplie d'huile sous pression, et qu'il y a une bague de cisaillement (9) raccordée au premier arbre (1) et comprenant un bord de cisaillement (14) conçu pour couper une pointe du tube de cisaillement (8) afin d'ouvrir la chambre à huile sous pression si le premier arbre (1) glisse par rapport au second arbre (2) ce qui est le cas lorsque le couple est supérieur à un couple transférable maximum prédéfini donné par la pression d'huile et la conception de l'accouplement.

6. Accouplement limiteur de couple (20) selon l'une des revendications précédentes
**caractérisé en ce**
**qu'**il comprend un premier roulement à rouleaux (12) entre le premier arbre (1) et le second arbre (2) ou entre le premier arbre (1) et la bague d'accouplement (3), et qu'il comprend un second roulement à rouleaux (13) entre le premier arbre (1) et la bague d'accouplement (3).

7. Accouplement limiteur de couple (20) selon l'une des revendications précédentes
**caractérisé en ce**
**qu'**il comprend un jeu de vis de fixation (17) pour relier la bague d'accouplement (3) au second arbre (2), de préférence un jeu de quatre vis (17), conçues de sorte qu'avec les vis de fixation (17) la position du second arbre (2) sur le manchon d'accouplement conique (4) puisse être réglée.

8. Accouplement limiteur de couple (20) selon l'une des revendications précédentes
**caractérisé en ce**
**qu'**il comprend un ensemble de vis d'écartement (18) vissées dans un filetage de la bague d'accouplement (3) pour définir une distance entre une bride de raccordement (5) de la bague d'accouplement (3) et le second arbre (2), de préférence un ensemble de quatre vis (18).

9. Accouplement limiteur de couple (20) selon l'une des revendications précédentes
**caractérisé en ce**
**que** le second arbre (2) est un arbre creux d'un rotor (21) d'un moteur électrique.

10. Accouplement limiteur de couple (20) selon l'une des revendications précédentes
**caractérisé en ce**
**que** le premier arbre (1) est un arbre mené d'un moteur électrique à relier à une charge ou à un engrenage.

11. Accouplement limiteur de couple (20) selon l'une des revendications précédentes
**caractérisé en ce**
**qu'**il est conçu pour être utilisé dans la chaîne cinématique principale d'un tunnelier.
